# EUROPEAN PATENT SPECIFICATION

(11) **EP 4 462 573 B1**
(45) Date of publication and mention of the grant of the patent: **27.08.2025**
(21) Application number: 23751836.0
(22) Date of filing: 06.05.2023
(51) Int. Cl.: H01M 50/507, H01M 50/522

(54) **INSULATING SUPPORT AND BATTERY MODULE**
ISOLIERENDER TRÄGER UND BATTERIEMODUL
SUPPORT ISOLANT ET MODULE DE BATTERIE

(30) Priority: 30.03.2023 CN 202320682955 U
(43) Date of publication of application: 13.11.2024
(73) Proprietor: Eve Energy Co., Ltd., Huizhou, Guangdong 516006 (CN)
(72) Inventor: CHEN, Jingcong, Huizhou, Guangdong 516006 (CN)
(74) Representative: Cabinet Beaumont
(86) International application number: PCT/CN2023/092434
(87) International publication number: WO 2024/198039

(56) References cited:
- WO-A1-2014/203712
- CN-A- 109 728 237
- CN-A- 109 728 237
- CN-A- 114 927 818
- CN-A- 114 927 818
- CN-U- 206 742 311
- CN-U- 214 898 776
- CN-U- 216 085 195
- CN-U- 217 158 397
- CN-U- 218 731 478
- CN-U- 218 731 672
- JP-A- 2016 105 355
- US-A1- 2022 209 368

## Description

### TECHNICAL FIELD

The present application relates to the field of battery technology, for example, an insulating bracket and a cell module.

### BACKGROUND

At present, a motor vehicle cell module is usually composed of multiple cells. Two adjacent cell modules need to be connected by a bus bar to implement the series or parallel connection of each cell in the cell modules. In an assembly process, a bus bar may be detachably secured on a mounting space of an insulating bracket, then the insulating bracket with the secured bus bar is disposed on a cell pack, and the bus bar is welded to the cell post to form a cell module. There is a following defect in the related art: During the production of an insulating bracket, to facilitate the mounting of a bus bar, or to adapt to the manufacturing error of the bus bar, the mounting space of the insulating bracket generally has some margin, so that after the bus bar is mounted in the mounting space, the bus bar has some movement on the insulating bracket; and when a cell module vibrates, the insulating bracket shakes up and down, and as a result, the surface of the bus bar is scratched.

US 2022/209368 A1 and CN 109728237 A are further prior art.

### SUMMARY

The present invention is defined by the appended independent claims. Preferred embodiments are set forth in the dependent claims.

An embodiment of the present application provides an insulating bracket. The structure is simple, and the mounting stability is high.

An embodiment of the present application provides a cell module. The structure is simple, the yield is high, and the manufacturing cost is low.

In a first aspect, an embodiment of the present application provides an insulating bracket. The insulating bracket is configured for a bus bar to be mounted on, where the bus bar is configured to be connected to a cell post. The insulating bracket includes a main body, a securing member, and an elastic member. The main body is formed with at least one mounting hole extending through the main body in a first direction and configured for the bus bar to be mounted in. The securing member and the elastic member are disposed on the hole wall of each mounting hole at intervals. The securing member is configured to abut against a first side surface of the bus bar. The elastic member is configured to abut against a second side surface of the bus bar. The elastic member always has a tendency to urge the bus bar to move toward and press against the securing member.

In an embodiment, the elastic member includes a first spring contact and a second spring contact. The first spring contact and the second spring contact are disposed on a sidewall of the mounting hole at intervals. The first spring contact and the second spring contact are both configured to abut against the bus bar.

In an embodiment, the first spring contact and the second spring contact are disposed on two sidewalls that are connected at an angle of the mounting hole.

Alternatively, the first spring contact and the second spring contact are disposed on two opposite sidewalls of the mounting hole.

In an embodiment, the second spring contact is disposed at the corner of two adjacent sidewalls of the mounting hole.

In an embodiment, the first spring contact includes a first body. A first end of the first body is connected to the hole wall of the mounting hole. A second end of the first body extends toward the inside of the mounting hole. In a direction where the first body faces the securing member, the second end of the first body protrudes with a first abutting portion configured to abut against the bus bar.

In an embodiment, the first abutting portion includes a first sheet body and a second sheet body. The first sheet body is connected to the first body at an angle. The second sheet body is connected to the first sheet body at an angle. The second sheet body is configured to abut against the bus bar. The first body and the second sheet body are disposed at intervals in the first direction.

In an embodiment, at least one of the connection position between the first body and the first sheet body or the connection position between the first sheet body and the second sheet body is provided with a chamfer.

In an embodiment, the second spring contact includes a second body. A first end of the second body is connected to the hole wall of the mounting hole. A second end of the second body extends toward the inside of the mounting hole. In a direction where the second body faces the securing member, the second end of the second body protrudes with a second abutting portion configured to abut against the bus bar.

In an embodiment, the second abutting portion includes a third sheet body and a fourth sheet body. The third sheet body is connected to the second body at an angle. The fourth sheet body is connected to the third sheet body at an angle. The fourth sheet body is configured to abut against the bus bar. The second body and the fourth sheet body are disposed at intervals in the first direction.

In an embodiment, at least one of the connection position between the second body and the third sheet body or the connection position between the fourth sheet body and the third sheet body is provided with a chamfer.

In an embodiment, the first spring contact is integrally formed with the main body.

Moreover/Alternatively, the second spring contact is integrally formed with the main body.

In an embodiment, two first spring contacts are disposed. The two first spring contacts are symmetrically disposed on the same sidewall of the mounting hole along the center line of the mounting hole.

Moreover/Alternatively, two second spring contacts are disposed. The two second spring contacts are symmetrically disposed on two opposite sidewalls of the mounting hole along the center line of the mounting hole.

In an embodiment, the securing member includes a cantilever and an engagement portion. The cantilever is connected to the main body. The engagement portion is disposed on the end of the cantilever facing away from the main body. The engagement portion is protrudingly disposed toward the inside of the mounting hole. The engagement portion is configured to abut against the side surface of the bus bar facing away from the elastic member.

In an embodiment, a bypass groove is recessed on a position of the hole wall of the mounting hole corresponding to the cantilever.

In an embodiment, the securing member is disposed at least on two opposite sides of the mounting hole in a second direction. The second direction is disposed at an angle from the first direction.

In an embodiment, at least one of the main body, the securing member, or the elastic member is made of an engineering plastic alloy.

In an embodiment, the hole wall of the mounting hole protrudes with a stopper plate. The stopper plate and the securing member are disposed at intervals in the first direction.

In an embodiment, the main body is provided with multiple mounting holes at intervals in a third direction. The third direction is disposed at an angle from the first direction.

In a second aspect, an embodiment of the present application provides a cell module. The cell module includes multiple cells and bus bars, and the preceding insulating bracket. All of the cells are arranged in the third direction. The insulating bracket is disposed on the side surface of the cells provided with posts. A bus bar is disposed in each mounting hole of the insulating bracket. The bus bar connects the posts of two adjacent cells.

In an embodiment, the bus bar is provided with a locking groove. The engagement portion of the securing member of the insulating bracket is clamped in the locking groove.

Embodiments of the present application have the following beneficial effects: The insulating bracket has a mounting hole on the main body, so that the bus bar can be mounted in the mounting hole, and the insulating bracket can press against two opposite side surfaces of the bus bar along the thickness direction of the bus bar with the help of the securing member and the elastic member to secure the bus bar. The elastic member can use its own elasticity to adjust the mounting space in the mounting hole to accommodate bus bars of different thicknesses. The applicability is wide, and the elastic member always has the tendency to drive a bus bar to move toward the securing member. Therefore, the elastic member and the securing member can always press against two opposite sides of the bus bar, so that the bus bar cannot move in the mounting hole, that is, the bus bar has no room for movement. In this manner, not only is the risk of damage caused by collision and friction between the insulating bracket and the bus bar reduced, but also the reliability, stability, and durability of a product are improved, thereby reducing the risk of jumping off caused by the vibration of the insulating bracket during the transportation of incoming materials and improving the yield of the incoming materials for the insulating bracket.

### BRIEF DESCRIPTION OF DRAWINGS

The present application is further described in detail according to the drawings and embodiments.
FIG. 1 is a view illustrating the structure of an insulating bracket according to an embodiment of the present application.
FIG. 2 is an enlarged partial view of part A of FIG. 1.
FIG. 3 is partial view one taken from another angle to illustrate the insulating bracket according to an embodiment of the present application.
FIG. 4 is partial view two taken from another angle to illustrate the insulating bracket according to an embodiment of the present application.
FIG. 5 is a view illustrating the structure of a cell module according to an embodiment of the present application.
FIG. 6 is an enlarged partial view of part B of FIG. 5.

### Reference list

- 1: main body
- 11: mounting hole
- 12: bypass groove
- 2: securing member
- 21: cantilever
- 22: engagement portion
- 3: elastic member
- 31: first spring contact
- 311: first body
- 312: first abutting portion
- 3121: first sheet body
- 3122: second sheet body
- 32: second spring contact
- 321: second body
- 322: second abutting portion
- 3221: third sheet body
- 3222: fourth sheet body
- 4: bus bar
- 41: locking groove
- 5: stopper plate
- 6: cell
- 61: post

### DETAILED DESCRIPTION

Solutions in embodiments of the present application are described in detail below in conjunction with the drawings. The embodiments described below are part, not all of the embodiments of the present application. Based on the embodiments of the present application, all other embodiments obtained by those skilled in the art without creative work are within the scope of the present application.

In the description of the present application, unless otherwise expressly specified, the term "connected to each other", "connected" or "fixed" is to be construed in a broad sense, for example, as fixedly connected, detachably connected, or integrated; mechanically connected or electrically connected; directly connected to each other or indirectly connected to each other via an intermediary; or internally connected between two elements or interaction relations between two elements. For those of ordinary skill in the art, specific meanings of the preceding terms in the present application may be construed according to specific circumstances.

In the present application, unless otherwise expressly specified, when a first feature is described as "on" or "below" a second feature, the first feature and the second feature may be in direct contact or be in contact via another feature between the two features instead of being in direct contact. Moreover, when the first feature is described as "on", "above" or "over" the second feature, the first feature is right on, above or over the second feature or the first feature is obliquely on, above or over the second feature, or the first feature is simply at a higher level than the second feature. When the first feature is described as "under", "below", or "underneath" the second feature, the first feature is right under, below, or underneath the second feature or the first feature is obliquely under, below, or underneath the second feature, or the first feature is simply at a lower level than the second feature.

At present, a motor vehicle cell module usually consists of multiple cells. Adjacent cell modules need to be connected by a bus bar to implement the series or parallel connection of the cell modules. In an assembly process, a bus bar is detachably fixed on a mounting space of an insulating bracket first, then the insulating bracket with the fixed bus bar is placed on a cell pack, and the bus bar is welded to a cell post to form a cell module. The related art has the following defect: During the production of an insulating bracket, to facilitate the installation of a bus bar, or to accommodate the manufacturing error of the bus bar, the mounting space of the insulating bracket usually has some margin, so that after the bus bar is installed in the mounting space, the bus bar has some movement space on the insulating bracket; and when a cell module vibrates, the insulating bracket swings up and down, causing the surface of the bus bar to be scratched.

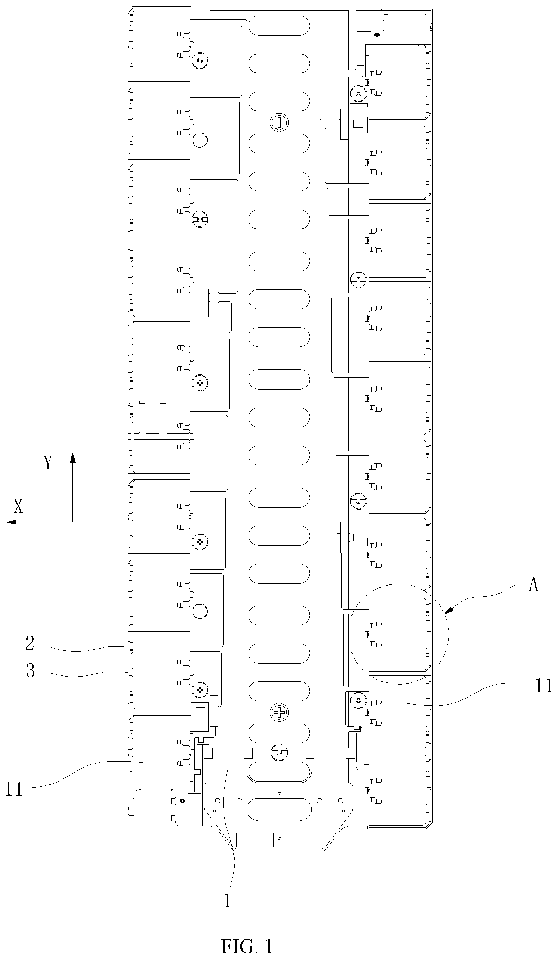

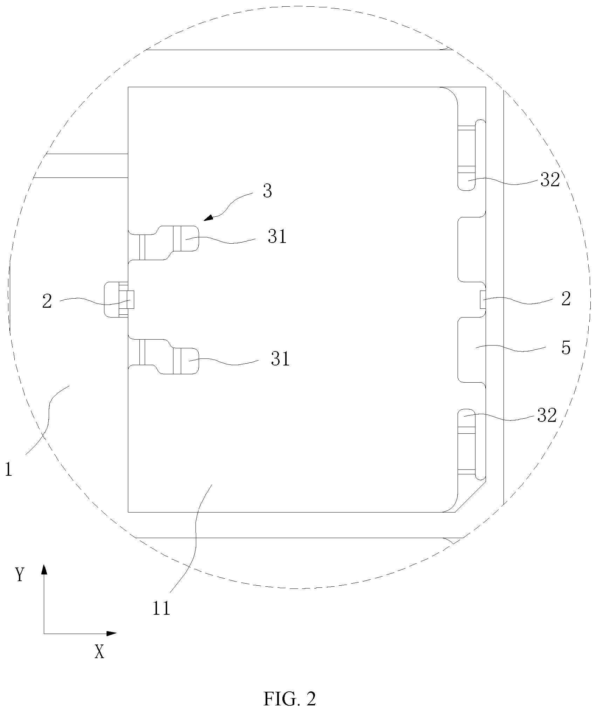

To solve the preceding technical problems, as shown in FIGS. 1 and 2, the present application provides an insulating bracket. The insulating bracket is configured for a bus bar 4 to be mounted on, where the bus bar 4 is configured to be connected to a cell post 6. The insulating bracket includes a main body 1, a securing member 2, and an elastic member 3. The main body 1 has at least one mounting hole 11 extending through the main body 1 in a first direction. The mounting hole 11 is configured for the bus bar 4 to be mounted in. The securing member 2 and the elastic member 3 are arranged on the hole wall of each mounting hole 11 at intervals. The securing member 2 is configured to abut against a first side surface of the bus bar 4. The elastic member 3 is configured to abut against a second side surface of the bus bar 4. The elastic member 3 always has a tendency to urge the bus bar 4 to move towards and press against the securing member 2. The first side surface and the second side surface are opposite. The insulating bracket disposes a mounting hole 11 on the main body 1, so that the bus bar 4 can be mounted in the mounting hole 11, and the insulating bracket may abut against two opposite side surfaces of the bus bar 4 in the thickness direction through the cooperation of the securing member 2 and the elastic member 3 to secure the insulating bracket to the bus bar 4. The elastic member 3 can use its own elasticity to make the mounting space in the mounting hole 11 adjustable to fit bus bars 4 of different thicknesses. The applicability is wide, and the elastic member 3 always has a tendency to drive a bus bar 4 towards and press against the securing member 2. Therefore, the elastic member 3 and the securing member 2 can always press against two opposite sides of the bus bar 4, so that the bus bar 4 cannot move in the mounting hole 11, that is, the bus bar 4 has no movement space. This reduces the risk of damage caused by collision and friction between the insulating bracket and the bus bar 4, and improves the reliability, stability, and durability of a product. This also reduces the risk of dislocation caused by vibration of the insulating bracket during transportation of incoming materials and improves the yield of incoming materials of the insulating bracket. It should be noted that in the coordinate system of the drawings, a z-axis direction is the first direction, an x-axis direction is a second direction, and a y-axis direction is a third direction. Optionally, the bus bar 4 is an aluminum bar. The aluminum bar has relatively light weight, and good conductivity. In other embodiments, the bus bar 4 may also be a copper bar or a bus bar structure made of other materials.

In this embodiment, as shown in FIG. 2, the elastic member 3 includes a first spring contact 31 and a second spring contact 32. The first spring contact 31 and the second spring contact 32 are arranged on a sidewall of the mounting hole 11 at intervals. The first spring contact 31 and the second spring contact 32 are both configured to abut against the bus bar 4. It can be understood that the first spring contact 31 and the second spring contact 32 are elastic sheet bodies. The first spring contact 31 and the second spring contact 32 are configured to abut against the bus bar 4 together to provide elastic support, thereby improving the stability of securing the insulating bracket to the bus bar 4. In an embodiment, the first spring contact 31 and the second spring contact 32 are arranged on two sidewalls that are connected at an angle of the mounting hole 11, so that the first spring contact 31 and the second spring contact 32 can elastically support multiple positions of the bus bar 4 at the same time, and the stability is high. In some embodiments, the first spring contact 31 and the second spring contact 32 are arranged on two opposite sidewalls of the mounting hole 11. Similarly, this design can also support two sides of the bus bar 4, and the stability is high. In an embodiment, the second spring contact 32 is disposed at the corner of two adjacent sidewalls of the mounting hole 11, so that an end of the second spring contact 32 is simultaneously connected to the two adjacent sidewalls of the mounting hole 11, thereby improving the connection stability between the second spring contact 32 and the main body 1. For example, two first spring contacts 31 are disposed. The two first spring contacts 31 are symmetrically disposed on the same sidewall of the mounting hole 11 along the center line of the mounting hole 11. Moreover/Alternatively, two second spring contacts 32 are disposed. The two second spring contacts 32 are symmetrically disposed on two opposite sidewalls of the mounting hole 11 along the center line of the mounting hole 11. Through the preceding design, the two first spring contacts 31 and the two second spring contacts 32 can be symmetrically distributed in the mounting hole 11, so that the contact surface between a spring contact and the bus bar 4 is more uniformly stressed, and the stability of the bus bar 4 is higher.

In other embodiments, the two first spring contacts 31 may also be disposed asymmetrically. Alternatively, the two second spring contacts 32 are disposed asymmetrically.

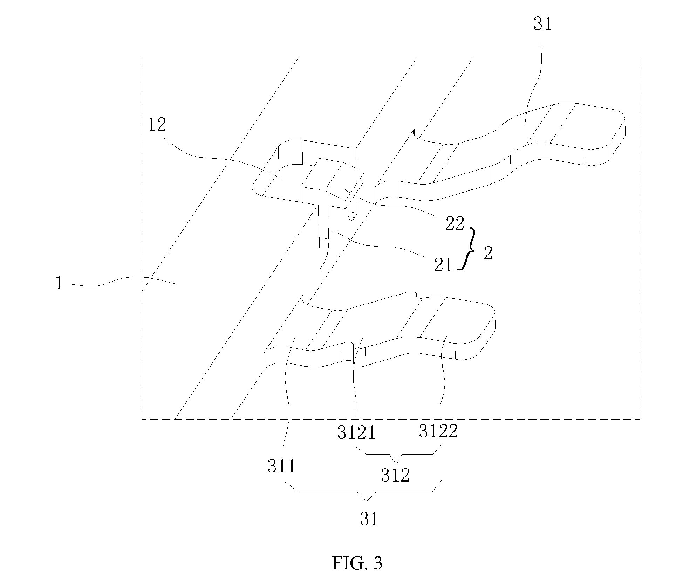

In an embodiment, as shown in FIG. 3, the first spring contact 31 includes a first body 311. A first end of the first body 311 is connected to the hole wall of the mounting hole 11. A second end of the first body 311 extends toward the inside of the mounting hole 11. In a direction where the first body 311 faces the securing member 2, the second end of the first body 311 protrudes with a first abutting portion 312 configured to abut against the bus bar 4. When the bus bar 4 is mounted, the first abutting portion 312 may contact the bus bar 4 in advance and provide a supporting force for the bus bar 4 compared with other positions of the first spring contact 31. Since the first abutting portion 312 is located at the end of the first body 311 facing away from the hole wall of the mounting hole 11, the first body 311 can provide large elastic space for the first abutting portion 312. In this manner, the mounting hole 11 of the insulating bracket has large adjustment space.

In an embodiment, the first abutting portion 312 includes a first sheet body 3121 and a second sheet body 3122. The first sheet body 3121 is connected to the first body 311 at an angle. The second sheet body 3122 is connected to the first sheet body 3121 at an angle. The second sheet body 3122 is configured to abut against the bus bar 4. The first body 311 and the second sheet body 3122 are disposed at intervals in the first direction. In this embodiment, the end of the second sheet body 3122 far away from the first sheet body 3121 extends toward the inside of the mounting hole 11, so that the first body 311, the first sheet body 3121, and the second sheet body 3122 are connected to form a z-shaped structure. The first spring contact 31 of the structure has strong bending strength. Optionally, a right angle is formed between the first body 311 and the first sheet body 3121 and between the first sheet body 3121 and the second sheet body 3122. In other embodiments, an obtuse angle or an acute angle may be formed between the first body 311 and the first sheet body 3121 and between the first sheet body 3121 and the second sheet body 3122.

In an embodiment, other structures of this embodiment are the same, and only the shape of the first spring contact 31 is different from the shape of the first spring contact 31 of the other embodiments. For example, the end of the second sheet body 3122 far away from the first sheet body 3121 extends toward the hole wall of the mounting hole 11, so that the first body 311, the first sheet body 3121, and the second sheet body 3122 are connected to form a u-shaped structure. The first spring contact 31 of the u-shaped structure also has strong bending strength.

In an embodiment, at least one of the connection position between the first body 311 and the first sheet body 3121 or the connection position between the first sheet body 3121 and the second sheet body 3122 is provided with a chamfer. The chamfer is configured for reducing the stress concentration at the corner position of the first spring contact 31, thereby improving the torsion resistance of the first spring contact 31. In this embodiment, the connection position between the first body 311 and the first sheet body 3121 and the connection position between the first sheet body 3121 and the second sheet body 3122 are provided with chamfers to improve the torsion resistance of the first spring contact 31 and the compatibility with the bus bar 4. In other embodiments, only one of the connection position between the first body 311 and the first sheet body 3121 or the connection position between the first sheet body 3121 and the second sheet body 3122 is provided with a chamfer.

In an embodiment, the first spring contact 31 is integrally formed with the main body 1. That is, the first body 311, the first sheet body 3121, and the second sheet body 3122 are integrally formed. The structure formed integrally has high torsional strength and is not easily broken.

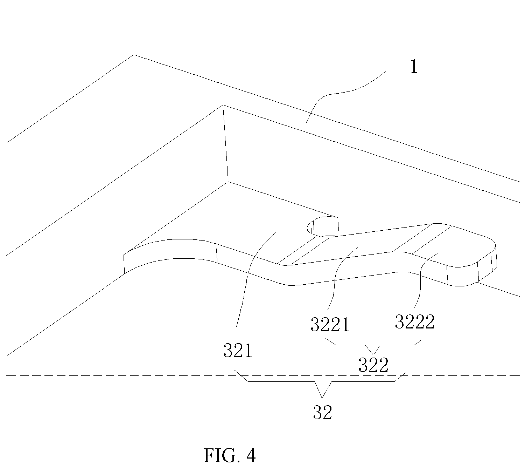

In another embodiment, as shown in FIG. 4, the second spring contact 32 includes a second body 321. A first end of the second body 321 is connected to the hole wall of the mounting hole 11. A second end of the second body 321 extends toward the inside of the mounting hole 11. In a direction where the second body 321 faces an engagement portion 22 of the securing member 2, the second end of the second body 321 protrudes with a second abutting portion 322 configured to abut against the bus bar 4. When the bus bar 4 is mounted, the second abutting portion 322 may contact the bus bar 4 in advance and provide a supporting force for the bus bar 4 compared with other positions of the second spring contact 32. Since the second abutting portion 322 is located at the end of the second body 321 facing away from the hole wall of the mounting hole 11, the second body 321 can provide large elastic space for the second abutting portion 322. In this manner, the mounting hole 11 of the insulating bracket has large adjustment space.

In an embodiment, the second abutting portion 322 includes a third sheet body 3221 and a fourth sheet body 3222. The third sheet body 3221 is connected to the second body 321 at an angle. The fourth sheet body 3222 is connected to the third sheet body 3221 at an angle. The fourth sheet body 3222 is configured to abut against the bus bar 4. The second body 321 and the fourth sheet body 3222 are disposed at intervals in the first direction. In this embodiment, the end of the fourth sheet body 3222 far away from the third sheet body 3221 extends toward the inside of the mounting hole 11, so that the second spring contact 32 also has a z-shaped structure. The second spring contact 32 of the structure has a high elasticity and strong torsional bending strength. In an embodiment, the second body 321 is connected to the third sheet body 3221 at a right angle. The third sheet body 3221 is connected to the fourth sheet body 322 at a right angle. Of course, in other embodiments, an obtuse angle or an acute angle may be formed between the second body 321 and the third sheet body 3221 and between the third sheet body 3221 and the fourth sheet body 3222.

In an embodiment, other structures of this embodiment are the same, and only the shape of the second spring contact 32 is different from the shape of the first spring contact 31 of the other embodiments. For example, the end of the fourth sheet body 3222 far away from the third sheet body 3221 extends toward the hole wall of the mounting hole 11, so that the second body 321, the third sheet body 3221, and the fourth sheet body 3222 are connected to form a u-shaped structure. The second spring contact 32 of the u-shaped structure also has strong bending strength.

Optionally, at least one of the connection position between the second body 321 and the third sheet body 3221 or the connection position between the fourth sheet body 3222 and the third sheet body 3221 is provided with a chamfer. The chamfer is disposed on the second spring contact 32 to eliminate the concentrated stress at the corner. In this embodiment, the connection position between the second body 321 and the third sheet body 3221 and the connection position between the fourth sheet body 3222 and the third sheet body 3221 are provided with chamfers to improve the torsion resistance of a spring contact and the compatibility with the bus bar 4. In some embodiments, only one of the connection position between the second body 321 and the third sheet body 3221 or the connection position between the third sheet body 3221 and the fourth sheet body 3222 is provided with a chamfer.

In an embodiment, a side surface of the second sheet body 3122 and a side surface of the fourth sheet body 3222 facing the bus bar 4 are planes. The contact area between a plane structure and the bus bar 4 is large, thereby providing stable elasticity for the bus bar 4.

In an embodiment, the first spring contact 31 and the second spring contact 32 each has a z-shaped structure. In other embodiments, the first spring contact 31 and the second spring contact 32 may also have a u-shaped structure, an l-shaped structure, or other shapes.

In an embodiment, the second spring contact 32 is integrally formed with the main body 1. That is, the second body 321, the third sheet body 3221, and the fourth sheet body 3222 are integrally formed, thereby improving the torsion resistance of the second spring contact 32.

In some embodiments, the length extension direction of the first spring contact 31 is disposed perpendicular to the length extension direction of the second spring contact 32. In an embodiment, the length of the first spring contact 31 extends toward the second direction, and the length of the second spring contact 32 extends toward the third direction. The third direction is disposed perpendicular to the first direction and the second direction respectively. The structure can provide stable supporting force for the bus bar 4.

In another embodiment, the elastic member 3 includes a mounting plate and a spring. The mounting plate and the securing member 2 are disposed on the hole wall of the mounting hole 11 at intervals. The spring is disposed on the end face of the mounting plate facing the securing member 2. The spring is configured to abut against the bus bar 4, thereby providing elasticity for the bus bar 4 by the spring.

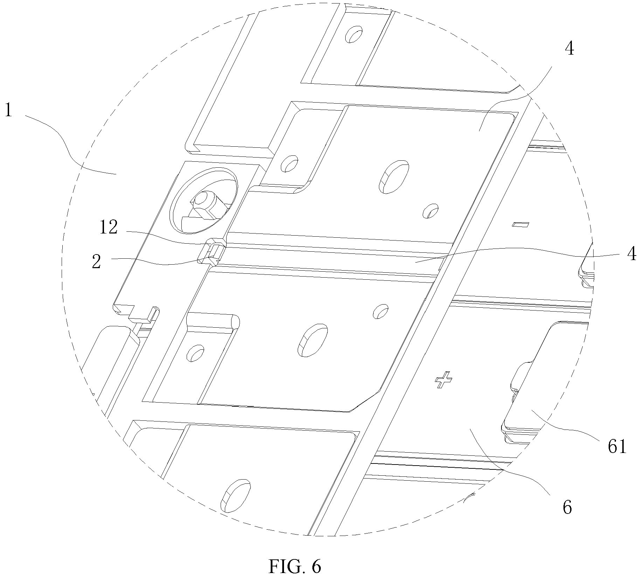

In this embodiment, as shown in FIGS. 3 and 6, the securing member 2 is configured to engage with the bus bar 4 to facilitate disassembly and assembly of the bus bar 4 on the insulating bracket. In other embodiments, the securing member 2 and bus bar 4 may also be connected by bonding, snapping, or other detachable connection methods.

In an embodiment, the securing member 2 is disposed at least on two opposite sides of the mounting hole 11 in the second direction. The second direction is disposed at an angle from the third direction. In this embodiment, the second direction is disposed perpendicular to the third direction. Two securing members 2 are disposed. The two securing members 2 are disposed on two opposite sidewalls of the mounting hole 11. Thus, the bus bar 4 may be stopped by the two securing members 2, thereby improving the mounting stability of the bus bar 4.

In an embodiment, the securing member 2 includes a cantilever 21 and an engagement portion 22. The cantilever 21 is connected to the main body 1. The engagement portion 22 is disposed on the end of the cantilever 21 facing away from the main body 1. The engagement portion 22 is protrudingly disposed toward the inside of the mounting hole 11. The engagement portion 22 is configured to abut against the bus bar 4. It is to be understood that the cantilever 21 also has certain elasticity, so that the cantilever 21 can be moved toward two sides. During mounting, two engagement portions 22 may be pressed outwardly. Then the bus bar 4 can be put into the mounting hole 11. The bus bar 4 is pressed to move to a proper position in a direction of counteracting the elasticity of the elastic member 3. Then the pressing on the engagement portion 22 is released. The cantilever 21 may drive the engagement portion 22 to spring back. Then the pressing on the bus bar 4 is released. The elastic member 3 may urge the bus bar 4 to move toward and press toward the engagement portion 22. In this manner, the engagement portion 22 and the first spring contact 31 and the second spring contact 32 stop the bus bar 4 to secure the bus bar 4.

In an embodiment, as shown in FIG. 3, a bypass groove 12 is recessed on a position of the hole wall of the mounting hole 11 corresponding to the cantilever 21. The bypass groove 12 can allow the end of the cantilever 21 provided with the engagement portion 22 to have movable space on the main body 1 to facilitate the mounting of the bus bar 4.

Optionally, a guidance bevel is formed on the side surface of the engagement portion 22 facing away from the elastic member 3. The guidance bevel is inclined downward toward the inside of the mounting hole 11 to facilitate the mounting of the bus bar 4.

In an embodiment, the engagement portion 22 has a trapezoidal section. The lower bottom of the trapezoidal engagement portion 22 is connected to the cantilever 21. The surface formed by the lower bottom of the engagement portion 22 is a plane. The contact area between the plane structure and the bus bar 4 is large, so that the stopper effect is good, thereby improving the stability of the securing member 2 in stopping the position of the bus bar 4.

Optionally, at least one of the main body 1, the securing member 2, or the elastic member 3 is made of an engineering plastic alloy. The engineering plastic alloy is also called PC + ABS.

The material has the characteristics of excellent heat resistance, dimensional stability, impact resistance, and processing fluidity. In this embodiment, the main body 1, the securing member 2, and the elastic member 3 are all integrally made of the engineering plastic alloy.

In some embodiments, as shown in FIGS. 1 and 2, the hole wall of the mounting hole 11 protrudes with a stopper plate 5. The stopper plate 5 and the engagement portion 22 are disposed at intervals in the first direction. The stopper plate 5 is configured to prevent the first spring contact 31 and the second spring contact 32 from being damaged due to being excessively pressed by the bus bar 4. During mounting, the bus bar 4 needs to be pressed. The bus bar 4 may press the first spring contact 31 and the second spring contact 32. When the bus bar 4 presses the first spring contact 31 and the second spring contact 32 to a certain position, the bus bar 4 may abut against the stopper plate 5, so that the bus bar 4 cannot continue to press the first spring contact 31 and the second spring contact 32, thereby protecting the spring contacts.

In this embodiment, the main body 1 is provided with multiple mounting holes 11 at intervals in the third direction. The third direction is disposed at an angle from the first direction. In this manner, the insulating bracket can secure multiple bus bars 4 at the same time, thereby electrically connecting multiple cells 6. For example, twenty mounting holes 11 are disposed. Ten of the mounting holes 11 are a mounting group. Two mounting groups are disposed on two opposite sides of the main body 1 in its width direction. The width direction of the main body 1 is the second direction. The mounting holes 11 in a mounting group are arranged in the length direction of the main body 1, that is, in the third direction. Thus, the insulating bracket may secure twenty bus bars 4 at the same time.

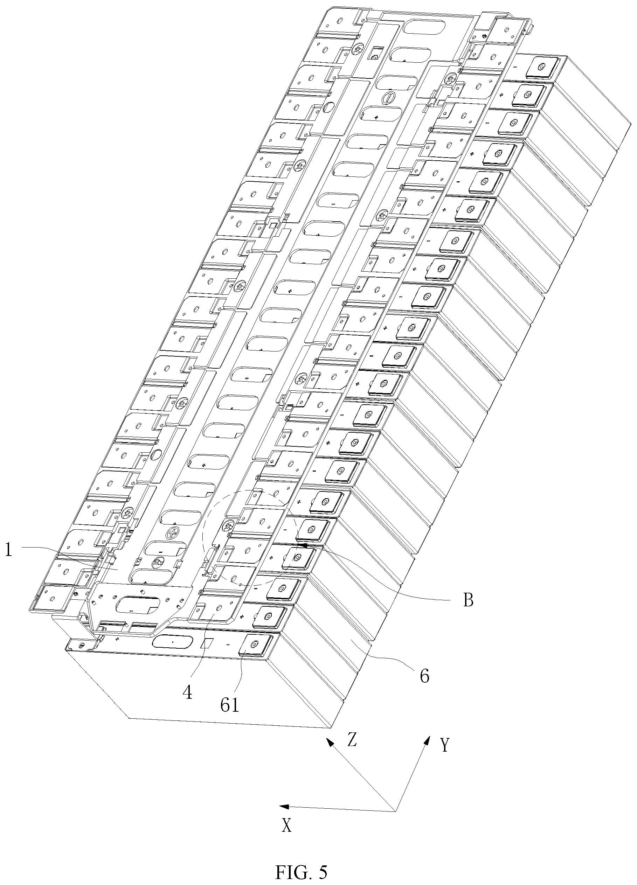

As shown in FIGS. 5 and 6, the present application also provides a cell module. The cell module includes multiple cells 6 and bus bars 4, and the insulating bracket of any embodiment described above. All of the cells 6 are arranged in the third direction. The insulating bracket is disposed on the side surface of the multiple cells 6 provided with posts 61. A bus bar 4 is disposed in each mounting hole 11 of the insulating bracket. The bus bar 4 connects the posts 61 of two adjacent cells 6. The insulating bracket disposes the mounting hole 11 configured for the bus bar 4 to be mounted on the main body 1 and stops the bus bar 4 by the securing member 2 and the elastic member 3. The elastic member 3 always has the tendency to urge the bus bar 4 to move toward and press against the securing member 2. In this manner, the mounting hole 11 has adjustment space, so that the insulating bracket can secure bus bars 4 of different thicknesses. The posts 61 designed for different types of cells 6 have different heights. The sizes of the bus bars 4 connected to different posts 61 are different. Thus, the bracket assembly can be applied to different types of cells 6. Due to the high adaptability to and compatibility with the height difference of the cell 6, there is no need to specially open molds to design different insulating brackets to reduce the manufacturing cost of the cell module.

In this embodiment, as shown in FIG. 6, the bus bar 4 is provided with a locking groove 41. The engagement portion 22 is clamped in the locking groove 41. The engagement portion 22 cooperates with the locking groove 41 to improve the stability of the bus bar 4 in a mounting cavity, thereby improving the stability of the entire bracket assembly. In an embodiment, the locking groove 41 extending through the bus bar 4 is disposed on the bus bar 4 in the second direction, and the engagement portions 22 of engagement members on two sides are clamped at two ends of the locking groove 41.

## Claims

1. An insulating bracket, configured for a bus bar (4) to be mounted on, wherein the bus bar (4) is configured to be connected to a cell post, and the insulating bracket comprises a main body (1), a securing member (2), and an elastic member (3), wherein the main body (1) is formed with at least one mounting hole (11) extending through the main body (1) in a first direction, the at least one mounting hole (11) is configured for the bus bar (4) to be mounted in, the securing member (2) and the elastic member (3) are disposed on a hole wall of each mounting hole (11) of the at least one mounting hole (11) at intervals, the securing member (2) is configured to abut against a first side surface of the bus bar (4), the elastic member (3) is configured to abut against a second side surface of the bus bar (4), and the elastic member (3) always has a tendency to urge the bus bar (4) to move toward and press against the securing member (2);
wherein the elastic member (3) comprises a first spring contact (31) and a second spring contact (32), the first spring contact (31) and the second spring contact (32) are disposed on a sidewall of the each mounting hole (11) at intervals, and the first spring contact (31) and the second spring contact (32) are both configured to abut against the bus bar (4);
wherein the first spring contact (31) and the second spring contact (32) are disposed on two sidewalls that are connected at an angle of the each mounting hole (11); or the first spring contact (31) and the second spring contact (32) are disposed on two opposite sidewalls of the each mounting hole (11); and
**characterised in that**
the second spring contact (32) is disposed at a corner of two adjacent sidewalls of the each mounting hole (11).

2. The insulating bracket according to claim 1, wherein the first spring contact (31) comprises a first body (311), a first end of the first body (311) is connected to a hole wall of the each mounting hole (11), a second end of the first body (311) extends toward an inside of the each mounting hole (11), and in a direction where the first body (311) faces the securing member (2), the second end of the first body (311) protrudes with a first abutting portion (312) configured to abut against the bus bar (4).

3. The insulating bracket according to claim 2, wherein the first abutting portion (312) comprises a first sheet body (3121) and a second sheet body (3122), the first sheet body (3121) is connected to the first body (311) at an angle, the second sheet body (3122) is connected to the first sheet body (3121) at an angle, the second sheet body (3122) is configured to abut against the bus bar (4), and the first body (311) and the second sheet body (3122) are disposed at intervals in the first direction.

4. The insulating bracket according to claim 3, wherein at least one of a connection position between the first body (311) and the first sheet body (3121) or a connection position between the first sheet body (3121) and the second sheet body (3122) is provided with a chamfer.

5. The insulating bracket according to claim 1, wherein the second spring contact (32) comprises a second body (321), a first end of the second body (321) is connected to a hole wall of the each mounting hole (11), a second end of the second body (321) extends toward an inside of the each mounting hole (11), and in a direction where the second body (321) faces the securing member (2), the second end of the second body (321) protrudes with a second abutting portion (322) configured to abut against the bus bar (4).

6. The insulating bracket according to claim 5, wherein the second abutting portion (322) comprises a third sheet body (3221) and a fourth sheet body (3222), the third sheet body (3221) is connected to the second body (321) at an angle, the fourth sheet body (3222) is connected to the third sheet body (3221) at an angle, the fourth sheet body (3222) is configured to abut against the bus bar (4), and the second body (321) and the fourth sheet body (3222) are disposed at intervals in the first direction.

7. The insulating bracket according to claim 6, wherein at least one of a connection position between the second body (321) and the third sheet body (3221) or a connection position between the fourth sheet body (3222) and the third sheet body (3221) is provided with a chamfer.

8. The insulating bracket according to claim 1, wherein two first spring contacts (31) are disposed, and the two first spring contacts (31) are symmetrically disposed on a same sidewall of the each mounting hole (11) along a center line of the each mounting hole (11), and/or wherein two second spring contacts (32) are disposed, and the two second spring contacts (32) are symmetrically disposed on two opposite sidewalls of the each mounting hole (11) along a center line of the each mounting hole (11).

9. The insulating bracket according to claim 1, wherein the securing member (2) comprises a cantilever (21) and an engagement portion (22), the cantilever (21) is connected to the main body (1), the engagement portion (22) is disposed on an end of the cantilever (21) facing away from the main body (1), the engagement portion (22) protrudes toward an inside of the each mounting hole (11), and the engagement portion (22) is configured to abut against a side surface of the bus bar (4) opposite to the elastic member (3).

10. The insulating bracket according to claim 9, wherein a bypass groove (12) is recessed on a position of a hole wall of the each mounting hole (11) corresponding to the cantilever (21).

11. The insulating bracket according to claim 1, wherein at least two opposite sides of the each mounting hole (11) in a second direction are provided with securing members (2), and the second direction is disposed at an angle from the first direction.

12. The insulating bracket according to claim 1, wherein a hole wall of the each mounting hole (11) protrudes with a stopper plate (5), and the stopper plate (5) and the securing member (2) are disposed at intervals in the first direction.

13. The insulating bracket according to claim 1, wherein the main body (1) is provided with a plurality of mounting holes (11) at intervals in a third direction, and the third direction is disposed at an angle from the first direction.

14. A cell module, comprising a plurality of cells (6) and a plurality of bus bars (4), wherein the plurality of cells (6) are arranged in a third direction, the cell module further comprises the insulating bracket according to any one of claims 1 to 13, the insulating bracket is disposed on a side surface of the plurality of cells (6) provided with posts (61), one of the plurality of bus bars (4) is disposed in each mounting hole (11) of the insulating bracket, and each of the plurality of bus bar (4) connects posts (61) of two adjacent cells (6) of the plurality of cells (6).

15. The cell module according to claim 14, wherein the bus bar (4) is provided with a locking groove (41), and an engagement portion (22) of the securing member (2) of the insulating bracket is clamped in the locking groove (41).

## Patentansprüche

1. Isolierhalter, der für eine darauf zu montierende Stromschiene (4) ausgebildet ist, wobei die Stromschiene (4) zum Anschluss an einen Zellenterminal ausgebildet ist, und wobei der Isolierhalter einen Hauptkörper (1), ein Sicherungselement (2) und ein elastisches Element (3) umfasst, wobei der Hauptkörper (1) mit mindestens einer Montagebohrung (11) ausgebildet ist, die sich durch den Hauptkörper (1) in einer ersten Richtung erstreckt, wobei die mindestens eine Montagebohrung (11) dafür ausgebildet ist, dass die Stromschiene (4) darin montiert wird, wobei das Sicherungselement (2) und das elastische Element (3) an einer Bohrungswand jeder Montagebohrung (11) der mindestens einen Montagebohrung (11) in Abständen angeordnet sind, wobei das Sicherungselement (2) so ausgebildet ist, dass es an einer ersten Seitenfläche der Stromschiene (4) anliegt, während das elastische Element (3) so ausgebildet ist, dass es an einer zweiten Seitenfläche der Stromschiene (4) anliegt, und wobei das elastische Element (3) stets dazu neigt, die Stromschiene (4) zur Bewegung in Richtung auf das Sicherungselement (2) zu drängen und gegen dieses zu drücken;
wobei das elastische Element (3) einen ersten Federkontakt (31) und einen zweiten Federkontakt (32) umfasst, wobei der erste Federkontakt (31) und der zweite Federkontakt (32) an einer Seitenwand der jeden Montagebohrung (11) in Abständen angeordnet sind, und wobei der erste Federkontakt (31) und der zweite Federkontakt (32) beide so ausgebildet sind, dass sie an der Stromschiene (4) anliegen;
wobei der erste Federkontakt (31) und der zweite Federkontakt (32) an zwei Seitenwänden der jeden Montagebohrung (11) angeordnet sind, die in einem Winkel miteinander verbunden sind; oder wobei der erste Federkontakt (31) und der zweite Federkontakt (32) an zwei gegenüberliegenden Seitenwänden der jeden Montagebohrung (11) angeordnet sind; und
**dadurch gekennzeichnet, dass**
der zweite Federkontakt (32) an einer Ecke der zwei benachbarten Seitenwände der jeden Montagebohrung (11) angeordnet ist.

2. Isolierhalter nach Anspruch 1, wobei der erste Federkontakt (31) einen ersten Körper (311) umfasst, dessen erstes Ende mit einer Bohrungswand der jeden Montagebohrung (11) verbunden ist, während ein zweites Ende des ersten Körpers (311) sich in Richtung auf eine Innenseite der jeden Montagebohrung (11) erstreckt, und wobei das zweite Ende des ersten Körpers (311) in einer Richtung, bei der der erste Körper (311) dem Sicherungselement (2) zugewandt ist, mit einem ersten Anschlagabschnitt (312) vorsteht, der zur Anlage an der Stromschiene (4) ausgebildet ist.

3. Isolierhalter nach Anspruch 2, wobei der erste Anschlagabschnitt (312) einen ersten Blechkörper (3121) und einen zweiten Blechkörper (3122) umfasst, wobei der erste Blechkörper (3121) in einem Winkel mit dem ersten Körper (311) verbunden ist, während der zweite Blechkörper (3122) in einem Winkel mit dem ersten Blechkörper (3121) verbunden ist, wobei der zweite Blechkörper (3122) so ausgebildet ist, dass er an der Stromschiene (4) anliegt, und wobei der erste Körper (311) und der zweite Blechkörper (3122) in der ersten Richtung in Abständen angeordnet sind.

4. Isolierhalter nach Anspruch 3, wobei mindestens eine der Verbindungsstellen zwischen dem ersten Körper (311) und dem ersten Blechkörper (3121) und der Verbindungsstelle zwischen dem ersten Blechkörper (3121) und dem zweiten Blechkörper (3122) mit einer Abschrägung versehen ist.

5. Isolierhalter nach Anspruch 1, wobei der zweite Federkontakt (32) einen zweiten Körper (321) umfasst, dessen erstes Ende mit einer Bohrungswand der jeden Montagebohrung (11) verbunden ist, während ein zweites Ende des zweiten Körpers (321) sich in Richtung auf eine Innenseite der jeden Montagebohrung (11) erstreckt, und wobei das zweite Ende des zweiten Körpers (321) in einer Richtung, bei der der zweite Körper (321) dem Sicherungselement (2) zugewandt ist, mit einem zweiten Anschlagabschnitt (322) vorsteht, der zur Anlage an der Stromschiene (4) ausgebildet ist.

6. Isolierhalter nach Anspruch 5, wobei der zweite Anschlagabschnitt (322) einen dritten Blechkörper (3221) und einen vierten Blechkörper (3222) umfasst, wobei der dritte Blechkörper (3221) in einem Winkel mit dem zweiten Körper (321) verbunden ist, während der vierte Blechkörper (3222) in einem Winkel mit dem dritten Blechkörper (3221) verbunden ist, wobei der vierte Blechkörper (3222) so ausgebildet ist, dass er an der Stromschiene (4) anliegt, und wobei der zweite Körper (321) und der vierte Blechkörper (3222) in der ersten Richtung in Abständen angeordnet sind.

7. Isolierhalter nach Anspruch 6, wobei mindestens eine der Verbindungsstellen zwischen dem zweiten Körper (321) und dem dritten Blechkörper (3221) und der Verbindungsstelle zwischen dem vierten Blechkörper (3222) und dem dritten Blechkörper (3221) mit einer Abschrägung versehen ist.

8. Isolierhalter nach Anspruch 1, wobei zwei erste Federkontakte (31) angeordnet sind und die beiden ersten Federkontakte (31) entlang einer Mittellinie der jeden Montagebohrung (11) symmetrisch an einer gleichen Seitenwand der jeden Montagebohrung (11) angeordnet sind, und/oder
wobei zwei zweite Federkontakte (32) angeordnet sind und die beiden zweiten Federkontakte (32) entlang einer Mittellinie der jeden Montagebohrung (11) symmetrisch an zwei gegenüberliegenden Seitenwänden der jeden Montagebohrung (11) angeordnet sind.

9. Isolierhalter nach Anspruch 1, wobei das Sicherungselement (2) einen Ausleger (21) und einen Eingriffsabschnitt (22) umfasst, wobei der Ausleger (21) mit dem Hauptkörper (1) verbunden ist, während der Eingriffsabschnitt (22) an einem vom Hauptkörper (1) abgewandten Ende des Auslegers (21) angeordnet ist, wobei der Eingriffsabschnitt (22) in Richtung auf eine Innenseite der jeden Montagebohrung (11) vorsteht, und wobei der Eingriffsabschnitt (22) so ausgebildet ist, dass er an einer Seitenfläche der Stromschiene (4) gegenüber dem elastischen Element (3) anliegt.

10. Isolierhalter nach Anspruch 9, wobei eine Bypass-Nut (12) an einer dem Ausleger (21) zugeordneten Position einer Bohrungswand der jeden Montagebohrung (11) zurückgesetzt ist.

11. Isolierhalter nach Anspruch 1, wobei mindestens zwei gegenüberliegende Seiten der jeden Montagebohrung (11) in einer zweiten Richtung mit Sicherungselementen (2) versehen sind, und wobei die zweite Richtung einen Winkel mit der ersten Richtung einschließt.

12. Isolierhalter nach Anspruch 1, wobei eine Bohrungswand der jeden Montagebohrung (11) mit einer Anschlagplatte (5) vorsteht, und wobei die Anschlagplatte (5) und das Sicherungselement (2) in der ersten Richtung in Abständen angeordnet sind.

13. Isolierhalter nach Anspruch 1, wobei der Hauptkörper (1) in einer dritten Richtung mit einer Vielzahl von Montagebohrungen (11) in Abständen versehen ist, und wobei die dritte Richtung einen Winkel mit der ersten Richtung einschließt.

14. Zellenmodul, umfassend eine Vielzahl von Zellen (6) und eine Vielzahl von Stromschienen (4), wobei die Vielzahl von Zellen (6) in einer dritten Richtung angeordnet sind, wobei das Zellenmodul ferner den Isolierhalter nach einem der Ansprüche 1 bis 13 umfasst, der an einer Seitenfläche der Vielzahl von Zellen (6), die mit Terminals (61) versehen sind, angeordnet ist, wobei eine der Vielzahl von Stromschienen (4) in jeder Montagebohrung (11) des Isolierhalters angeordnet ist, und wobei jede der Vielzahl von Stromschienen (4) Terminals (61) von zwei benachbarten Zellen (6) der Vielzahl von Zellen (6) verbindet.

15. Zellenmodul nach Anspruch 14, wobei die Stromschiene (4) mit einer Rastnut (41) versehen ist, und wobei ein Eingriffsabschnitt (22) des Sicherungselements (2) des Isolierhalters in der Rastnut (41) eingeklemmt ist.

## Revendications

1. Support isolant, configuré pour qu'une barre omnibus (4) soit montée sur celui-ci, dans lequel la barre omnibus (4) est configurée pour être connectée à un poteau de cellule, et le support isolant comprend un corps principal (1), un élément de maintien (2) et un élément élastique (3), dans lequel le corps principal (1) est pourvu d'au moins un trou de montage (11) s'étendant à travers le corps principal (1) dans une première direction, l'au moins un trou de montage (11) est configuré pour que la barre omnibus (4) soit montée dans celui-ci, l'élément de maintien (2) et l'élément élastique (3) sont disposés à intervalles sur une paroi de trou de chaque trou de montage (11) de l'au moins un trou de montage (11), l'élément de maintien (2) est configuré pour s'appuyer contre une première surface latérale de la barre omnibus (4), l'élément élastique (3) est configuré pour s'appuyer contre une deuxième surface latérale de la barre omnibus (4), et l'élément élastique (3) présente toujours une tendance à pousser la barre omnibus (4) à se déplacer et à appuyer contre l'élément de maintien (2) ;
dans lequel l'élément élastique (3) comprend un premier contact à ressort (31) et un deuxième contact à ressort (32), le premier contact à ressort (31) et le deuxième contact à ressort (32) sont disposés sur une paroi latérale de chaque trou de montage (11) à intervalles, et le premier contact à ressort (31) et le deuxième contact à ressort (32) sont tous deux configurés pour s'appuyer contre la barre omnibus (4) ;
dans lequel le premier contact à ressort (31) et le deuxième contact à ressort (32) sont disposés sur deux parois latérales qui sont reliées à un angle de chaque trou de montage (11) ; ou le premier contact à ressort (31) et le deuxième contact à ressort (32) sont disposés sur deux parois latérales opposées de chaque trou de montage (11) ; et
**caractérisé en ce que**,
le deuxième contact à ressort (32) est disposé à un coin de deux parois latérales adjacentes de chaque trou de montage (11).

2. Support isolant selon la revendication 1, dans lequel le premier contact à ressort (31) comprend un premier corps (311), une première extrémité du premier corps (311) est reliée à une paroi de trou de chaque trou de montage (11), une deuxième extrémité du premier corps (311) s'étend vers un intérieur de chaque trou de montage (11), et dans une direction dans laquelle le premier corps (311) fait face à l'élément de maintien (2), la deuxième extrémité du premier corps (311) fait saillie avec une première partie d'aboutement (312) configurée pour s'appuyer contre la barre omnibus (4).

3. Support isolant selon la revendication 2, dans lequel la première partie d'aboutement (312) comprend un premier corps de feuille (3121) et un deuxième corps de feuille (3122), le premier corps de feuille (3121) est relié au premier corps (311) à un angle, le deuxième corps de feuille (3122) est relié au premier corps de feuille (3121) à un angle, le deuxième corps de feuille (3122) est configuré pour s'appuyer contre la barre omnibus (4), et le premier corps (311) et le deuxième corps de feuille (3122) sont disposés à intervalles dans la première direction.

4. Support isolant selon la revendication 3, dans lequel au moins une d'une position de liaison entre le premier corps (311) et le premier corps de feuille (3121) et d'une position de liaison entre le premier corps de feuille (3121) et le deuxième corps de feuille (3122) est pourvue d'un chanfrein.

5. Support isolant selon la revendication 1, dans lequel le deuxième contact à ressort (32) comprend un deuxième corps (321), une première extrémité du deuxième corps (321) est reliée à une paroi de trou de chaque trou de montage (11), une deuxième extrémité du deuxième corps (321) s'étend vers un intérieur de chaque trou de montage (11), et dans une direction dans laquelle le deuxième corps (321) fait face à l'élément de maintien (2), la deuxième extrémité du deuxième corps (321) fait saillie avec une deuxième partie d'aboutement (322) configurée pour s'appuyer contre la barre omnibus (4).

6. Support isolant selon la revendication 5, dans lequel la deuxième partie d'aboutement (322) comprend un troisième corps de feuille (3221) et un quatrième corps de feuille (3222), le troisième corps de feuille (3221) est relié au deuxième corps (321) à un angle, le quatrième corps de feuille (3222) est relié au troisième corps de feuille (3221) à un angle, le quatrième corps de feuille (3222) est configuré pour s'appuyer contre la barre omnibus (4), et le deuxième corps (321) et le quatrième corps de feuille (3222) sont disposés à intervalles dans la première direction.

7. Support isolant selon la revendication 6, dans lequel au moins une d'une position de liaison entre le deuxième corps (321) et le troisième corps de feuille (3221) et d'une position de liaison entre le quatrième corps de feuille (3222) et le troisième corps de feuille (3221) est pourvue d'un chanfrein.

8. Support isolant selon la revendication 1, dans lequel deux premiers contacts à ressort (31) sont disposés, et les deux premiers contacts à ressort (31) sont disposés de manière symétrique sur une même paroi latérale de chaque trou de montage (11) le long d'une ligne médiane de chaque trou de montage (11), et/ou
dans lequel deux deuxièmes contacts à ressort (32) sont disposés, et les deux deuxièmes contacts à ressort (32) sont disposés de manière symétrique sur deux parois latérales opposées de chaque trou de montage (11) le long d'une ligne médiane de chaque trou de montage (11).

9. Support isolant selon la revendication 1, dans lequel l'élément de maintien (2) comprend un porte-à-faux (21) et une partie d'engagement (22), le porte-à-faux (21) est relié au corps principal (1), la partie d'engagement (22) est disposée sur une extrémité du porte-à-faux (21) éloigné du corps principal (1), la partie d'engagement (22) fait saillie vers un intérieur de chaque trou de montage (11), et la partie d'engagement (22) est configurée pour s'appuyer contre une surface latérale de la barre omnibus (4) à l'opposé de l'élément élastique (3).

10. Support isolant selon la revendication 9, dans lequel une rainure de dérivation (12) est encastrée sur une position d'une paroi de trou de chaque trou de montage (11) correspondant au porte-à-faux (21).

11. Support isolant selon la revendication 1, dans lequel au moins deux côtés opposés de chaque trou de montage (11) dans une deuxième direction sont pourvus d'éléments de maintien (2), et la deuxième direction est disposée à un angle par rapport à la première direction.

12. Support isolant selon la revendication 1, dans lequel une paroi de trou de chaque trou de montage (11) fait saillie avec une plaque d'arrêt (5), et la plaque d'arrêt (5) et l'élément de maintien (2) sont disposés à intervalles dans la première direction.

13. Support isolant selon la revendication 1, dans lequel le corps principal (1) est pourvu d'une pluralité de trous de montage (11) à intervalles dans une troisième direction, et la troisième direction est disposée selon un angle par rapport à la première direction.

14. Module de cellules, comprenant une pluralité de cellules (6) et une pluralité de barres omnibus (4), dans lequel la pluralité de cellules (6) sont disposées dans une troisième direction, le module de cellules comprend en outre le support isolant selon l'une quelconque des revendications 1 à 13, le support isolant est disposé sur une surface latérale de la pluralité de cellules (6) pourvues de poteaux (61), l'une de la pluralité de barres omnibus (4) est disposée dans chaque trou de montage (11) du support isolant, et chacune de la pluralité de barres omnibus (4) relie les poteaux (61) de deux cellules (6) adjacente de la pluralité de cellules (6).

15. Module de cellule selon la revendication 14, dans lequel la barre omnibus (4) est pourvue d'une rainure de verrouillage (41), et une partie d'engagement (22) de l'élément de maintien (2) du support isolant est serrée dans la rainure de verrouillage (41).
